(19) Europäisches Patentamt
European Patent Office
Office européen des brevets

(11) Veröffentlichungsnummer: **0 172 512**
**B1**

(12) # EUROPÄISCHE PATENTSCHRIFT

(45) Veröffentlichungstag der Patentschrift: **14.06.89**

(51) Int. Cl.⁴: **C 09 B 48/00**, C 09 B 57/04, C 09 B 26/02, C 09 B 67/10, C 09 D 5/00, C 08 K 5/34

(21) Anmeldenummer: **85110084.2**

(22) Anmeldetag: **12.08.85**

(54) **Azinpigmente.**

(30) Priorität: **22.08.84 DE 3430800**

(43) Veröffentlichungstag der Anmeldung: **26.02.86 Patentblatt 86/9**

(45) Bekanntmachung des Hinweises auf die Patenterteilung: **14.06.89 Patentblatt 89/24**

(84) Benannte Vertragsstaaten: **CH DE FR GB IT LI**

(56) Entgegenhaltungen:
**EP-A- 0 074 924**
**FR-A- 2 379 580**

(73) Patentinhaber: **BAYER AG, D-5090 Leverkusen 1 Bayerwerk (DE)**

(72) Erfinder: **Neeff, Rütger, Dr., verstorben (DE)**
Erfinder: **Rolf, Meinhard, Dr., Berta-von-Suttner-Strasse 24, D-5090 Leverkusen (DE)**
Erfinder: **Müller, Walter, Dipl.-Ing., Pfarrer-Klein-Strasse 3, D-5090 Leverkusen (DE)**

**EP 0 172 512 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Azinpigmente, die in einer der möglichen tautomeren Formen der Formel (I)

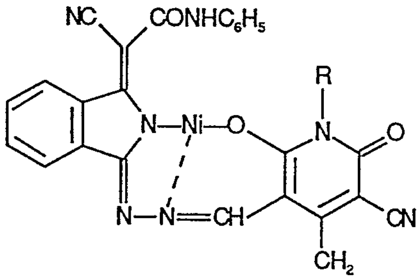

(I)

mit R = $CH_3$, 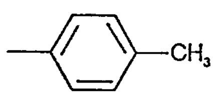 entsprechen,

wobei für den Fall, dass R = $-CH_3$ ist, das Pigment in der β-Modifikation vorliegt, die durch die Netzebenenabstände d/Å 13,33; 12,67; 9,17 und 15,15 mit den relativen Intensitäten 100, 100, 60 und 2%, die Normfarbwerte (nach DIN 5033) X = 26,64, Y = 15,36 und Z = 4,09 sowie einen Bunttonwinkel von 33,7° gekennzeichnet ist und für den Fall,

dass R = 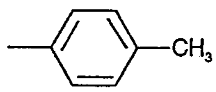

ist, das Pigment in der α- oder der β-Modifikation vorliegt, wobei die α-Modifikation durch die Netzebenenabstände d/Å 10,92; 3,81; 3,17; und 12,89 mit den relativen Intensitäten 100, 80, 40 und 5%, die Normfarbwerte (nach DIN 5033) X = 32,40; Y = 20,04 und Z = 4,13 sowie einen Bunttonwinkel von 41,0° und die β-Modifikation durch die Netzebenenabstände d/Å 13,07; 12,43; 15,75 und 3,28 mit den relativen Intensitäten 100, 100, 70 und 60%, die Normfarbwerte (nach DIN 5033) X = 25,75, Y = 15,00 und Z = 4,25 und einen Bunttonwinkel von 33,3° gekennzeichnet sind.

Die angegebenen Netzebenenabstände sind aus den 4 intensiven Linien der entsprechenden DEBYE-SCHERRER-Diagramme (Wellenlänge 1,54 Å, Cu-Kα-Strahlung) errechnet.

Das neue Pigment der Formel (I), worin R für Methyl steht, besitzt einen roten Farbton, der in etwa der Indicator Number 8 gemäss Colour Index Hue Indication Chart entspricht (β-Modifikation).

Das neue Pigment der Formel (I), worin R für p-Tolyl steht, besitzt einen roten Farbton, der in etwa der Indicator Number 8 gemäss Colour Index Hue Indication Chart entspricht (β-Modifikation).

Die erfindungsgemässe α-Modifikation des Pigmentes der Formel (I), worin R für p-Tolyl steht, besitzt einen roten Farbton, der in etwa der Indication Number 7 gemäss Colour Index Hue Indication Chart entspricht.

Zur Herstellung der neuen Pigmente stehen mehrere Verfahren zur Verfügung.

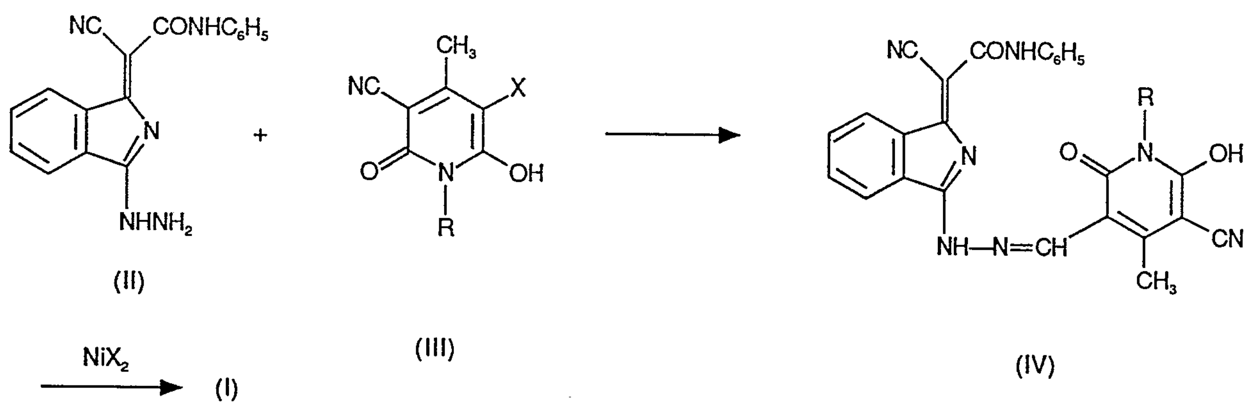


(II) (III) (IV) (I)

Das Hydrazon (II) wird mit dem Aldehyd bzw. einem gegebenenfalls substituierten Aldehydanil des N-Methyl-bzw. N-p-Tolylpyridons (III, X = CHO oder CHNAr, wobei Ar einen gegebenenfalls substituierten Phenylrest bezeichnet) zu den Azinen (IV) kondensiert und anschliessend mit einem Nickelsalz zu den Rotpigmenten (I) umgesetzt. Die Reaktion von (II) mit (III) wird zweckmässig in einem organischen Lösungsmittel bei Temperaturen zwischen 60 und 150°C gegebenenfalls unter Druck durchgeführt. Als organische Lösungsmittel kommen Alkohole wie Methanol, Ethanol, n-Butanol, Ethylenglykol, Ethylenglykolmonomethylether, Ethylenglykolmonoethylether oder Benzylalkohol; Aromaten wie Toluol, Xylol, Chlorbenzol, 1,2-Dichlorbenzol, Nitrobenzol oder Pyridin oder aprotische Lösungsmittel wie Dimethylformamid, N-Methylpyrrolidon, Dimethylacetamid, Dimethylsulfoxid oder Tetramethylensulfon in Betracht.

Als Substituenten im Anilinteil des Aldehydanils (III) kommen Halogen wie Chlor und Brom, Alkyl, insbesondere $C_1$–$C_4$-Alkyl, bevorzugt Methyl, Alkoxy, insbesondere $C_1$–$C_4$-Alkoxy, bevorzugt Methoxy und Nitro in Frage. Bevorzugt ist der Anilinteil des Aldehydanils unsubstituiert; er kann z.B. auch 1 oder 2 Substituenten tragen. Für die anschliessende Metallisierung kann (IV) isoliert und zweckmässig in einem der obengenannten Lösungsmittel mit einem Nickelsalz bei Temperaturen von 60–150 °C umgesetzt werden. Als Nickelsalz können das Acetat, Formiat, Carbonat, Sulfat, Chlorid oder Nitrat eingesetzt werden.

Gegebenenfalls schliesst sich an die Metallisierung eine Temperung in Wasser oder einem der obengenannten Lösungsmittel an. Zu diesem Zweck kann man entweder das Rohpigment der Formel (I) isolieren und gegebenenfalls nach Trocknung in demselben oder in Wasser oder in einem anderen Lösungsmittel 2–20 Std. bei Temperaturen von 100–250 °C gegebenenfalls unter Druck tempern, oder man erhitzt nach der Metallisierung den Reaktionsansatz ohne Isolation für 2–20 Std. auf 100–250 °C.

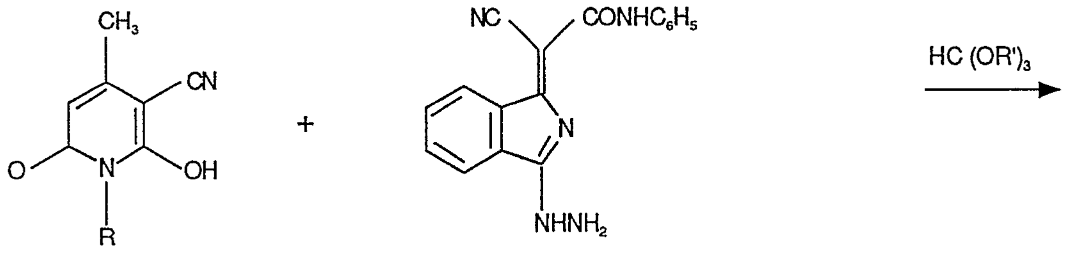


(V) (II) (IV)

Weiterhin besteht die Möglichkeit, 3-Cyan-6-hydroxy-1,4-dimethyl-pyridon-2 bzw. 3-Cyan-6-hydroxy-4-methyl-1-p-tolyl-pyridon-2

(V, R = $CH_3$ bzw. 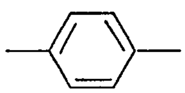 $CH_3$)

mit (II) und einem Orthoameisensäureester (R' = $CH_3$, $C_2H_5$) zu den Azinen (IV) zu kondensieren. Dabei arbeitet man in einem der obengenannten Lösungsmittel bei Temperaturen zwischen 60 und 150 °C, zweckmässig unter azeotroper Entfernung des sich bildenden Alkohols R'OH. Auch bei dieser Verfahrensvariante kann (IV) isoliert und wie oben geschildert metallisiert werden, oder man schliesst die Metallisierung im selben Lösungsmittel direkt an.

Gegebenenfalls wird anschliessend wie oben beschrieben 2–20 Std. bei 100–250 °C getempert.

Schliesslich kann man die Herstellung des Aldehydanils (III, R = CHNAr) in die Synthese einbeziehen und in einem vorgelagerten Schritt das Pyridon (V) und gegebenenfalls substituiertes Anilin mit einem Orthoameisensäureester [HC(OR')$_3$; R' = $CH_3$, $C_2H_5$] kondensieren. Anschliessend wird das Hydrazon (II) zugesetzt und wie oben geschildert zum Rotpigment umgesetzt. Die Reaktion des Pyridons kann in einem der obengenannten Lösungsmittel ebenfalls bei Temperaturen von 60–150 °C erfolgen.

In Abhängigkeit von der Reaktionstemperatur bei der Metallisierung bzw. Temperung fallen die Pigmente der Formel (I) in jeweils 2 verschiedenen Modifikationen an: bei niedrigeren Temperaturen bis ca. 150°C erhält man die α-Modifikation, die sich bei höheren Temperaturen in die blauere β-Modifikation umlagert.

Die α-Modifikation des Pigmentes der Formel (I) mit R = $CH_3$ ist aus EP-AI 74 924 bekannt.

Ein weiteres erfindungsgemässes Herstellungsverfahren für die β-Modifikation der Pigmente der Formel (I) besteht somit in der thermischen Umlagerung der entsprechenden α-Modifikationen. Zu diesem Zweck erhitzt man die Pigmente trocken oder in Gegenwart eines Verdünnungsmittels gegebenenfalls unter Druck für vorzugsweise etwa 2 bis etwa 20 Stunden auf 140 bis 250 °C, bevorzugt 180–200 °C.

Als Verdünnungsmittel kommen bevorzugt Wasser und organische Lösungsmittel, z. B. die vorstehend für die Reaktion von (II) mit (III) genannten in Betracht.

Somit handelt es sich bei der oben beschriebenen α-Modifikation des Pigments (I) mit

R = 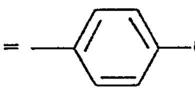 $CH_3$

um das Zwischenprodukt zur Herstellung der β-Modifikation.

Die Azinpigmente der Formel (I) fallen nach den oben beschriebenen Verfahren im allgemeinen in ausreichender Reinheit an und können direkt oder nach geeigneter Formierung als Pigmente eingesetzt werden.

Die Pigmente der Formel (I) eignen sich aufgrund ihrer guten Pigmenteigenschaften für die verschiedensten Pigmentapplikationen. So können sie zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischung mit anderen Stoffen können z. B. solche mit anorganischen Weisspigmenten wie Titandioxid (Rutil) verstanden werden. Zubereitungen sind z. B. Flushpasten mit organischen Flüssigkeiten und gegebenenfalls Konservierungsmitteln. Die Bezeichung Anstrichmittel steht z. B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Insbesondere eignen sich die neuen Pigmente zum Pigmentieren von makromolekularen organischen Stoffen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt

werden wie Polymerisate, Polyadditionsprodukte und Polykondensate. Genannt seinen plastische Massen wie Polyvinylchlorid, Polyvinylacetat, Polyvinylpropionat, Polyolefine, z.B. Polyethylen oder Polyamide, Superpolyamide, Polymerisate und Mischpolymerisate aus Acrylestern oder Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen. Wegen ihrer hohen Wetterechtheit eignen sich die Pigmente der Formel (I) besonders zum Einsatz in Automobillacken, insbesondere für Metalliclackierungen.

Die Pigmente der Formel (I) sind ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig, in plastischen Massen gut verteilbar und insbesondere ausgezeichnet lichtecht und migrationsecht.

Beispiel 1a

26,2 g 1-(Cyano-phenylcarbamoyl-methylen)-3-hydrazonoisoindolenin und 23 g N-Methyl-2-hydroxy-4-methyl-5-cyano-pyridon--(6)-3-aldehydanil werden in 280 ml Dimethylformamid 1 Stunde bei 100°C gerührt und dann mit 22,6 g Nickelacetat. $4H_2O$ in 15 Minuten versetzt. Man rührt dann 3 Stunden bei 120°C, saugt das in schönen roten, prismatischen Nadeln kristallisierte Produkt bei 80°C ab, wäscht mit Methanol und erhält nach dem Trocknen 42 g = 91% d.Th. des Pigmentes der Formel

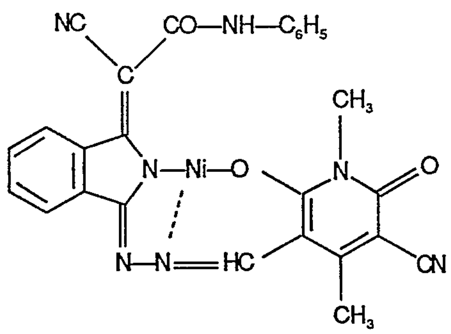

(Ia)

$C_{26}H_{17}N_7O_3Ni$ (533,7)

| | | | | |
|---|---|---|---|---|
| Ber. C 58,46 | H 3,19 | N 18,36 | 08,99 | Ni 11,00 |
| Gef. C 59,30 | H 3,29 | N 18,45 | 09,12 | Ni 10,85 |

Das Röntgenbeugungsdiagramm nach DEBYE-SCHERRER ist gekennzeichnet durch die Netzebenenabstände (relative Intensität)

19.09 (2), 12.79 (2), 11.54 (90), 10.11 (100), 9.70 (100), 8.74 (10), 7.50 (5), 6.49 (70), 5.99 (1), 5.40 (10), 4.82 (8), 4.54 (10), 4.31 (2), 3.92 (20), 3.74 (20), 3.52 (1), 3.44 (60), 3.34 (60), 3.24 (30), 3.00 (20), 2.893 (20), 2.764 (10), 2.626 (5), 2.522 (1), 2.437 (1), 2.372 (5).

Beispiel 1b

10 g des nach Beispiel 1a erhaltenen Pigmentes werden in 75 ml Nitrobenzol in 1 Stunde auf 200°C erhitzt und etwa 4 Stunden bei dieser Temperatur gehalten. Dabei wandelt sich das Pigment in lange blaustichig rote Nadeln der β-Modifikation um. Man saugt bei 100-110°C ab, wäscht mit Methanol und erhält nach dem Trocknen 9,85 g = 98,5% der β-Modifikation des Pigmentes der Formel (Ia).

$C_{26}H_{17}N_7O_3Ni$ (533,7)

| | | | | |
|---|---|---|---|---|
| Ber. C 58,46 | H 3,19 | N 18,36 | 08,99 | Ni 11,00 |
| Gef. C 58,89 | H 3,24 | N 18,41 | 09,07 | Ni 11,00 |

Das Röntgenbeugungsdiagramm nach DEBYE-SCHERRER ist gekennzeichnet durch die Netzebenenabstände (relative Intensität)

15.15 (2), 13.33 (100), 12.67 (100), 10.58 (50), 9.17 (60), 7.49 (60), 5.98 (20), 5.53 (1), 5.00 (10), 4.67 (10), 4.51 (10), 4.21 (5), 3.92 (1), 3.67 (10), 3.54 (15), 3.37 (25), 3.26 (1), 3.17 (20), 2.982 (2), 2.877 (3), 2.791 (2), 2.618 (3), 2.550 (3), 2.426 (1), 2.301 (5), 2.151 (1), 2.060 (2), 1.994 (2), 1.943 (3), 1.854 (3).

Beispiel 2

6,54 g 1-(Cyano-phenylcarbamoyl-methylen)-3-hydrazonoisoindolenin und 4,12 g N-Methyl-2-hydroxy-4-methyl-5-cyano-pyridon-(6)-3-aldehyd werden in 70 ml Dimethylformamid 1 Stunde bei 100°C gerührt und dann mit 5,64 g Nickelacetat · $4H_2O$ versetzt. Man rührt noch 3 Stunden bei 120°C, saugt das in schönen roten Nadeln kristallisierte Produkt bei 80°C ab, wäscht mit Methanol und erhält nach dem Trocknen 10,7 g = 92,9% d.h. des roten Pigmentes der Formel (Ia). Erhitzt man das erhaltene Pigment in 75 ml Nitrobenzol etwa 4 Stunden auf 200°C, so erhält man nach dem Absaugen, Waschen mit Methanol und Trocknen 10,54 g = 98,5% d.Th. der in langen blaustichig roten Nadeln kristallisierten β-Modifikation des Pigmentes der Formel (Ia).

Beispiel 3

3,55 g N-Methyl-2-hydroxy-4-methyl-5-cyano-pyridon-(6), 2,6 g Orthoameisensäuretrimethylester und 2,52 g Anilin werden in 75 ml Dimethylformamid 1 Stunde bei 120-125°C gerührt und bei 100°C mit 6,54 g 1-(Cyano-phenylcarbamoyl-methylen)-3-hydrazonoisoindolenin versetzt. Man rührt noch 1 Stunde bei 100°C, trägt 5,64 g Nickelacetat · $4H_2O$ ein, erwärmt 3 Stunden auf 120°C, saugt das in schönen roten Nadeln kristallisierte Produkt bei 80°C ab, wäscht mit Methanol und erhält nach dem Trocknen 10,25 g = 89% d.Th. des Pigmentes der Formel (I). Erhitzt man das erhaltene Pigment in 75 $cm^3$ Trichlorbenzol einige Stunden auf 200°C, so erhält man die in blaustichig roten Nadeln kristallisierte β-Modifikation des Pigmentes der Formel (Ia) in einer Ausbeute von 99% d.Th.

Beispiel 4

5 g 1-(Cyano-phenylcarbamoyl-methylen)-3-hydrazonoisoindolenin, 2,1 g Orthoameisensäuretrimethylester, 2,73 g N-Methyl-2-hydroxy-4-methyl-5-cyano-pyridon-(6) werden in 50 ml Dimethylformamid in 1 Stunde auf 120-125°C erwärmt und 3 Stunden bei 120-125°C gerührt.

Man versetzt dann mit 4,31 g Nickelacetat · $4H_2O$, rührt 3 Stunden bei 120°C, saugt das in schönen roten Nadeln kristallisierte Produkt bei 80°C ab, wäscht mit Methanol und erhält nach dem Trocknen 7,84 g = 89% d.Th. des roten Pigmentes der Formel (I). Erhitzt man das erhaltene Pigment in 60 ml Nitrobenzol 4 Stunden auf 200°C, so erhält man in 99% d.Th. Ausbeute die in blaustichig roten Nadeln kristallisierte β-Modifikation des Pigmentes der Formel (Ia).

Beispiel 5

5 g 1-(Cyano-phenylcarbamoyl-methylen)-3-hydrazonoisoindolenin, 2,1 g Orthoameisensäuretrimethylester und 2,73 g N-Methyl-2-hydroxy-4-methyl-5-cyano-pyridon-(6) werden in 50 ml Nitrobenzol in 1 Stunde auf 140-145°C erwärmt und 4 Stunden bei 140-145°C gerührt. Man trägt dann bei 110-120°C in 15 Minuten 4,31 g Nickelacetat. $4H_2O$ ein, rührt 3 Stunden bei 120°C, erwärmt in 1 Stunde auf 200°C und hält 4 Stunden bei 200°C. Nach dem Abkühlen auf 100-110°C saugt man das in blaustichig roten Nadeln kristallisierte Produkt ab, wäscht mit Methanol und erhält nach dem Trocknen 7,66 g = 87% d.Th. der β-Modifikation des Pigmentes der Formel (Ia).

Beispiel 6a

24 g 1-(Cyano-phenyl-carbamoyl-methylen)-3-hydrazonoisoindolenin und 27 g N-(p-Tolyl)-2-hydroxy-4-methyl-5-cyano-pyridon-(6)-3-aldehydanil werden in 300 ml Dimethylformamid 1 Stunde bei 100°C gerührt und dann mit 21 g Nickelacetat · $4H_2O$ in 15 Minuten versetzt. Man rührt dann 3 Stunden bei 120°C, saugt das in langen roten Nadeln kristallisierte Produkt bei 80°C ab, wäscht mit Methanol und erhält nach dem Trocknen 44,1 g = 91,3% d.Th. des scharlachroten Pigmentes der Formel (IIa)

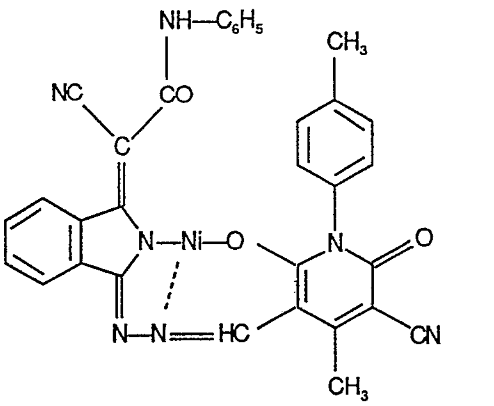

(IIa)

$C_{32}H_{21}N_7O_3Ni$ (609,7)

| | | | | |
|---|---|---|---|---|
| Ber. C 62,98 | H 3,44 | N 16,07 | 07,87 | Ni 9,63 |
| Gef. C 62,21 | H 3,78 | N 16,28 | 07,95 | Ni 9,71 |

Das Röntgenbeugungsdiagramm nach DEBYE-SCHERRER ist gekennzeichnet durch die Netzebenenabstände (relative Intensität)

12.89 (5), 10.92 (100), 9.71 (5), 8.58 (1), 7.77 (5), 6.74 (30), 6.01 (1), 5.50 (1), 4.90 (3), 4.55 (3), 4.19 (3), 3.81 (80), 3.50 (5), 3.32 (3), 3.17 (40), 2.969 (2), 2.767 (2), 2.529 (2), 2.398 (4), 2.206 (4), 2.069 (2), 1.987 (4), 1.868 (3), 1.744 (5).

Beispiel 6b

10 g des nach Beispiel 6a erhaltenen Pigmentes werden in 100 ml Nitrobenzol in 1 Stunde auf 200°C erhitzt und etwa 10 Stunden bei dieser Temperatur gerührt. Dabei wandeln sich die langen roten Nadeln des Pigmentes in grosse rote blättchenartige Prismen der β-Modifikation um. Man saugt bei 100-110°C ab, wäscht mit Methanol und erhält nach dem Trocknen 9,7 g = 97% d.Th. der β-Modifikation des Pigmentes der Formel (IIa).

$C_{32}H_{21}N_7O_3Ni$ (609,7)

| | | | | |
|---|---|---|---|---|
| Ber. C 62,98 | H 3,44 | N 16,07 | 07,87 | Ni 9,63 |
| Gef. C 62,44 | H 3,65 | N 16,19 | 07,85 | Ni 9,54 |

Das Röntgenbeugungsdiagramm nach DEBYE-SCHERRER ist gekennzeichnet durch die Netzebenenabstände (relative Intensität)

15.75 (70), 13.07 (100), 12.43 (100), 11.05 (3), 9.86 (3), 7.85 (3), 6.43 (25), 6.01 (30), 5.43 (15), 5.09 (8), 4.82 (5), 4.54 (3), 4.42 (3), 4.14 (1), 4.07 (5), 3.90 (8), 3.76 (1), 3.42 (25), 3.28 (60), 3.24 (3), 3.16 (3), 3.03 (8), 2.989 (3), 2.820 (1), 2.588 (3), 2.356 (3), 2.258 (1), 2.111 (3).

Beispiel 7

5,2 g N-(p-Tolyl)-2-hydroxy-4-methyl-5-cyan-pyridon-(6), 2,6 g Orthoameisensäuretrimethylester und 2,52 g Anilin werden in 75 ml Dimethylformamid 1 Stunde bei 120-125°C gerührt und bei 100°C mit 6,54 g 1-(Cyano-phenylcarbamoyl-methylen)-3-hydrazonoisoindolenin versetzt. Man rührt noch 1 Stunde bei 100°C, trägt 5,64 g Nickelacetat · $4H_2O$ ein, erwärmt 3 Stunden auf 120°C, saugt das in langen roten Nadeln kristallisierte Produkt bei 80°C ab, wäscht mit Methanol und erhält nach dem Trocknen 12,7 g = 96,5% d.Th. des Pigmentes der Formel (IIa) der α-Modifikation. Erhitzt man die so erhaltene α-Modifikation des Pigmentes in 100 ml Nitrobenzol etwa 10 Stunden auf 200°C, so erhält man nach dem Absaugen, Waschen mit Methanol und Trocknen 12,4 g = 97,6% d.Th. der in grossen roten blättchenartigen Prismen kristallisierten β-Modifikation des Pigmentes der Formel (IIa).

Beispiel 8

5 g 1-(Cyano-phenylcarbamoyl-methylen)-3-hydrazonoisoindolenin, 2,1 g Orthoameisensäuretrimethylester und 4 g N-(p-Tolyl)-2-hydroxy-4-methyl-5-cyan-pyridon-(6) werden in 75 ml Nitrobenzol in 1 Stunde auf 140-145°C erwärmt und 4 Stunden bei 140-145°C gerührt. Man trägt dann bei 110-120°C in 15 Minuten 4,31 g Nickelacetat · $4H_2O$ ein und rührt 3 Stunden bei 120°C. Nach Absaugen bei 120°C, Waschen mit Methanol und Trocknen erhält man 9,1 g = 90,5% d.Th. der in langen roten Nadeln kristallisierten α-Modifikation des Pigmentes der Formel (IIa).

Verzichtet man auf die Isolierung der α-Modifikation des Pigmentes und erhitzt den gesamten Ansatz nach beendeter Pigmentbildung 8–10 Stunden auf 200°C, so erhält man 8,9 g = 88,5% d.Th. der in grossen blättchenartigen Prismen kristallisierten β-Modifikation des Pigmentes der Formel (IIa).

Beispiel 9 (Anwendungsbeispiel)

4 g feingemahlenes Pigment gemäss Beispiel 1b werden in 92 g eines Einbrennlackes folgender Zusammensetzung dispergiert:

33% Alkydharz
15% Melaminharz
5% Glykolmonomethylether
34% Xylol
13% Butanol

Als Alkydharze kommen Produkte auf Basis synthetischer und pflanzlicher Fettsäuren wie Kokosöl, Rizinusöl, Rizinenöl, Leinöl u.a. in Frage. Anstelle von Melaminharzen können Harnstoffharze verwendet werden.

Nach erfolgter Dispergierung wird der pigmentierte Lack auf Papier-, Glas-, Kunststoff- oder Metall-Folien aufgetragen und 30 Minuten bei 130°C eingebrannt, wobei man eine brillante rote Lackierung erhält.

Setzt man anstelle des in Beispiel 1b genannten Pigmentes das gemäss Beispiel 6a hergestellte Pigment ein, so erhält man eine brillante gelbstichig rote Lackierung. Verwendet man entsprechend das Pigment gemäss Beispiel 6b, so gewinnt man eine brillante blaustichig rote Lackierung. Die Lackierungen besitzen ausgezeichnete Licht- und Wetterechtheiten sowie sehr gute Überlackierechtheiten.

Beispiel 10 (Anwendungsbeispiel)

6 Teile Pigment nach Beispiel 1b werden in 12 Teilen Xylol, 4,1 Teilen Butylacetat und 0.7 Teilen n-Butanol mit 22,5 Teilen einer 20%igen Lösung von Celluloseacetobutyrat in Butylacetat/Xylol (2:1) 30 Minuten im Red Devil mit 2–3 mm Glaskugeln dispergiert. Nach Auffetten durch Zusatz von 10 Teilen eines gesättigten Polyesterharzes (Dynapol H 700) 7,3 Teilen Melaminharz, 8,7 Teilen einer 20%igen Lösung von Celluloseacetobutyrat in Butylacetat/Xylol (2:1), 18 Teilen Butylacetat, 1,6 Teilen n-Butanol und 9,7 Teilen Xylol wird nochmals 5 Minuten dispergiert.

Zu diesem Lack setzt man eine Dispersion von Aluminiumpaste (60%) in einem organischen Lösungsmittel (ca. 1:2) in der Menge zu, dass das Verhältnis Pigment:Al zwischen 80:20 und 1:99 zu liegen kommt.

Dieser Lack wird aufgestrichen und nach dem Trocknen mit einem Klarlack auf Basis Acrylat/Melaminharz, der weitere Hilfsmittel wie z.B. UV-Absorber enthalten kann, überzogen und eingebrannt.

Man erhält eine rote Metalliclackierung mit brillanten Farbton und ausgezeichneter Wetterechtheit.

Ähnliche brillante rote Metalliclackierungen erhält man, wenn man anstelle des in Beispiel 1b genannten Pigmentes das gemäss Beispiel 6b hergestellte Pigment verwendet.

Beispiel 11

0,2 g des nach Beispiel 1b erhaltenen Pigmentes werden bei 160°C auf einem Mischwalzwerk in 65 g stabilisiertem PVC und 35 g Diisooctylphthalat dispergiert und bei 160°C ausgewalzt. Man erhält eine rote Folie von sehr guter Licht- und Migrationsechtheit.

Normalvalenzen und Bunttonwinkel der Pigmente aus den Beispielen 1 und 6

10 g Pigment und 100 g Kochsalz werden in einer Schwingmühle mit Stahlkugeln 8 Stunden vermahlen, anschliessend mit heissem Wasser ausgerührt, abfiltriert, gründlich mit Wasser gewaschen und bei 50°C getrocknet. Je 0,2 g des gemahlenen Pigmentes wird wie in Beispiel 11 beschrieben in eine Weich-PVC-Folie eingearbeitet.

Hieran wird die Remission mit Glanz vor weissem Hintergrund gemessen. Gemäss DIN 5033 erfolgt daraus die Berechnung der Normfarbwerte und des Bunttonwinkels $h°_{ab}$ für die Lichtart D 65 und den 10°-Normalbeobachter.

| | X | Y | Z | Bunttonwinkel |
|---|---|---|---|---|
| Beispiel 1a | 32,65 | 19,88 | 4,18 | 39,9° |
| Beispiel 1b | 26,64 | 15,36 | 4,09 | 33,7° |
| Beispiel 6a | 32,40 | 20,04 | 4,13 | 41,0° |
| Beispiel 6b | 25,75 | 15,00 | 4,25 | 33,0° |

## Patentansprüche

1. Pigment, das in einer seiner tautomeren Formen der Formel

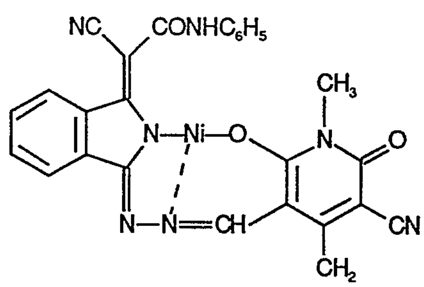

(I)

entspricht und in der β-Modifikation vorliegt, die durch die Netzebenenabstände d/Å 13,33; 12,67; 9,17 und 15,15 mit den relativen Intensitäten 100, 100, 60 und 2%, die Normfarbwerte (nach DIN 5033) X = 26,64, Y = 15,36 und Z = 4,09 sowie einen Bunttonwinkel von 33,7° gekennzeichnet ist.

2. Verfahren zur Herstellung des Pigmentes gemäss Anspruch 1, dadurch gekennzeichnet, dass man die α-Modifikation des Pigments, gege-

benenfalls in Gegenwart eines Verdünnungsmittels, auf 140–250 °C erhitzt.

3. Pigment, das in einer seiner tautomeren Formen der Formel

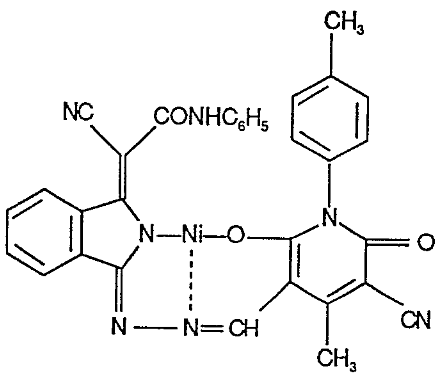

entspricht und in der α-Modifikation vorliegt, die durch die Netzebenenabstände d/Å 10,92; 3,81; 3,17 und 12,89 mit den relativen Intensitäten 100, 80, 40 und 5%, die Normfarbwerte (nach DIN 5033), X = 32,40, Y = 20,04 und Z = 4,13 sowie einen Bunttonwinkel von 41,0° gekennzeichnet ist.

4. Pigment, das in einer seiner tautomeren Formen der Formel

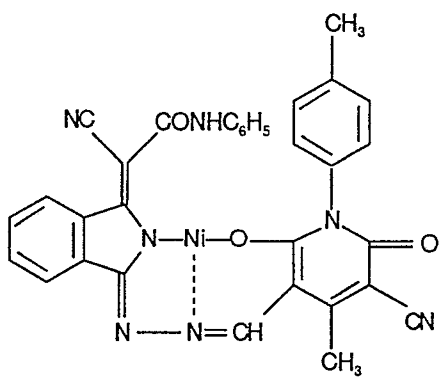

entspricht und in der β-Modifikation vorliegt, die durch die Netzebenenabstände d/Å 13,07; 12,43; 15,75 und 3,28 mit den relativen Intensitäten 100, 100, 70 und 60% die Normfarbwerte (nach DIN 5033) X = 25,75, Y = 15,00 und Z = 4,25 sowie einen Bunttonwinkel von 33,3° gekennzeichnet ist.

5. Verfahren zur Herstellung des Pigments gemäss Anspruch 4, dadurch gekennzeichnet, dass man die α-Modifikation des Pigments, gegebenenfalls in Gegenwart eines Verdünnungsmittels, auf 140–250 °C erhitzt.

6. Verfahren zum Pigmentieren von makromolekularen organischen Stoffen, dadurch gekennzeichnet, dass man Pigmente gemäss den Ansprüchen 1 oder 4 verwendet.

7. Verfahren zum Pigmentieren von Automobillacken, dadurch gekennzeichnet, dass man Pigmente gemäss den Ansprüchen 1 oder 4 verwendet.

**Claims**

1. Pigment which, in one of its tautomeric forms, has the formula

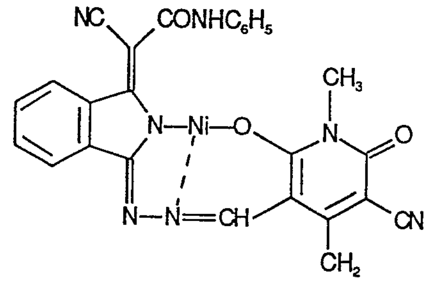

(I)

and is present in the β-modification which is characterised by the lattice plane spacings d/Å 13.33, 12.67, 9.17 and 15.15 having the relative intensities 100, 100, 60 and 2%, the standard tristimulus values (by DIN 5,033) X = 26.64, Y = 15.36 and Z = 4.09 and a hue angle of 33.7°.

2. Process for preparing the pigment according to Claim 1, characterised in that the α-modification of the pigment is heated to 140–250 °C in the absence or presence of a diluent.

3. Pigment which, in one of its tautomeric forms, has the formula

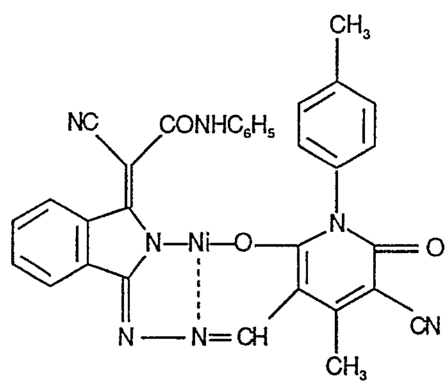

and is present in the α-modification which is characterised by the lattice plane spacings d/Å 10.92, 3.81, 3.17 and 12.89 having the relative intensities 100, 80, 40, and 5%, the standard tristimulus values (by DIN 5,033), X = 32.40, Y = 20.04 and Z = 4.13 and a hue angle of 41.0°.

4. Pigment which, in one of its tautomeric forms, has the formula

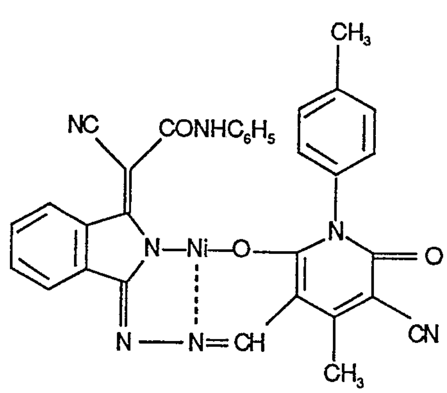

and is present in the β-modification which is characterised by the lattice plane spacings d/Å 13.07, 12.43, 15.75 and 3.28 having the relative intensities 100, 100, 70 and 60%, the standard tristimulus values (by DIN 5,033) X = 25.75, Y = 15.00 and Z = 4.25 and a hue angle of 33.3°.

5. Process for preparing the pigment according to Claim 4, characterised in that the α-modification of the pigment is heated to 140-250°C in the absence or presence of a diluent.

6. Process for pigmenting macromolecular organic substances, characterised in that pigments according to Claims 1 or 4 are used.

7. Process for pigmenting automotive paints, characterised in that pigments according to Claims 1 or 4 are used.

## Revendications

1. Pigment qui, sous l'une de ses formes tautomères, répond à la formule

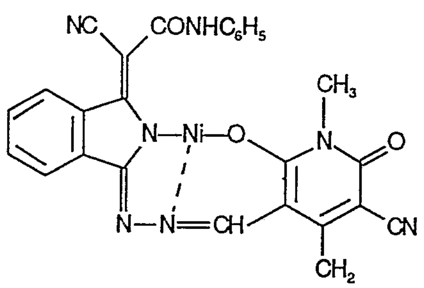

(I)

et se présente sous la forme β qui est caractérisée par les distances inter-réticulaires d/Å de 13,33; 12,67; 9,17 et 15,15 avec les intensités relatives 100, 100, 60 et 2%, les coordonnées trichromatiques (selon la norme DIN 5033) X = 26,64, Y = 15,36 et Z = 4,09 ainsi qu'un angle de teinte de 33,7°.

2. Procédé de préparation du pigment suivant la revendication 1, caractérisé en ce qu'on chauffe à 140-250°C la forme α du pigment, éventuellement en présence d'un diluant.

3. Pigment qui, sous l'une de ses formes tautomères, répond à la formule

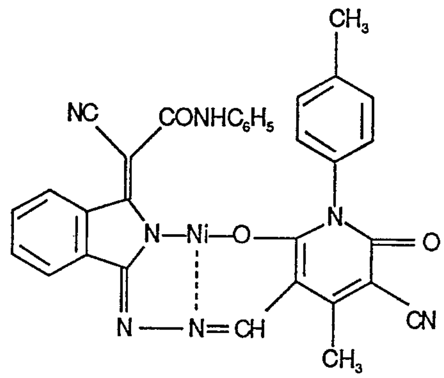

et qui est présent sous la forme α qui est caractérisée par les distances inter-réticulaires d/Å de 10,92; 3,81; 3,17 et 12,89 avec les intensités relatives 100, 80, 40 et 5%, les coordonnées trichromatiques (selon la norme DIN 5033) X = 32,40, Y = 20,04 et Z = 4,13 ainsi qu'un angle de teinte de 41,0°.

4. Pigment qui, sous l'une de ses formes tautomères, répond à la formule

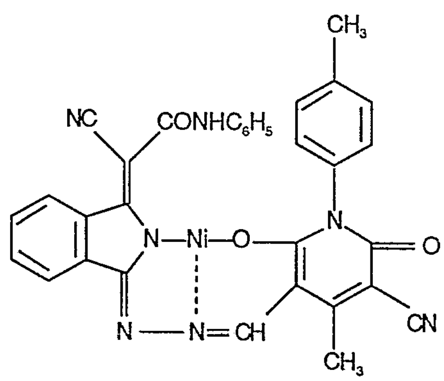

et se présente sous la forme β, qui est caractérisée par les distances inter-réticulaires d/Å de 13,07; 12,43; 15,75 et 3,28 avec les intensités relatives 100, 100, 70 et 60%, les coordonnées trichromatiques (selon la norme DIN 5033) X = 25,75, Y = 15,00 et Z = 4,25 ainsi qu'un angle de teinte de 33,3°.

5. Procédé de préparation du pigment suivant la revendication 4, caractérisé en ce qu'on chauffe à 140-250°C la forme α du pigment, le cas échéant en présence d'un diluant.

6. Procédé de pigmentation de matières organiques macromoléculaires, caractérisé en ce qu'on utilise des pigments suivant la revendication 1 ou 4.

7. Procédé de pigmentation de laques pour véhicules automobiles, caractérisé en ce qu'on utilise des pigments suivant la revendication 1 ou 4.